# EUROPEAN PATENT APPLICATION

(11) **EP 4 083 865 A1**
(43) Date of publication of application: **02.11.2022**
(21) Application number: 21171451.4
(22) Date of filing: 30.04.2021
(51) Int. Cl.: G06N 3/00, G06Q 10/10, G06F 16/9032

(54) **METHOD AND SYSTEM FOR PROVIDING VIRTUAL SERVICES**

(71) Applicant: Degussa Bank AG, 60605 Frankfurt am Main (DE)
(72) Inventor: ECKERT, Jürgen, 60325 Frankfurt am Main (DE); HORF, Michael, 65388 Schlangenbad (DE); SCHARDT, Axel, 60598 Frankfurt am Main (DE)
(74) Representative: Meyer-Dulheuer MD Legal Patentanwälte PartG mbB

(57) **Abstract**

A technique is provided for providing virtual services. The technique includes generating a virtual environment for a service provider offering a plurality of services. The generated virtual environment comprises a plurality of conversational prompts and a plurality of user interface (Ul) objects to be rendered to a user. The technique further includes receiving one or more inputs from the user in response to the rendered plurality of conversational prompts and the plurality of Ul objects. The technique further includes determining one or more services desired by the user based on a processing of the received one or more inputs. The technique further includes providing the desired one or more services to the user based on the determination.

## Description

### Tchnical Field

This disclosure relates generally to providing virtual services, and more particularly to system and method for providing virtual services using a virtual communicator.

### Background

Conventionally, providing services (for example, in the banks) require customers to be physically present in the premises of the service provider for availing the services. In particular, when the service provider is a bank, this is mandated because of the sensitivity associated with the financial operations. The customer are mandated to be in the in the premises of the bank so that the identities of the customer can be physically verified. For example, there are certain transactions requiring customers to physically sign documents that are verified on the spot for processing the transaction. This prevents chances of the identities of the customer from being counterfeited and for reducing possibilities of fraudulent transactions.

In certain scenarios, the transactions may involve interaction with plurality of bank executives, which becomes particularly convenient if the customer is physically present within the premises of the bank. In certain other scenarios, the customers may be forced to visit the premises due to lack of knowledge about a banking service. In such scenarios, the customers assume that the concierge services at the premises may provide clarification and allow the customer to submit the request for availing the service immediately after.

With increasing pressure with regards to availability of time, it is becoming increasingly difficult for the customers to carve out time to perform banking. Further, the existing online banking solutions provide a limited application suite and often fail to replicate the banking experience. Furthermore, in order to scale presence in the commercial banking space, it is imperative for the banks to have more physical branches which is not feasible and economically viable at times, especially when dealing with sparse customer base in a particular region.

Therefore, there exists a need to provide a system and/or method that facilitates the banks in providing a digital solution addressing the problems noted above. Such a solution should also simplify the overall banking experience and should be easily accessible while securely and digitally offering the services. Furthermore, there is also a need for a solution that facilitates and makes it simpler for a user to determine services offered by the bank and proactively assists in availing such services.

Further limitations and disadvantages of conventional and traditional approaches will become apparent to one of skill in the art, through comparison of described systems with some aspects of the present disclosure, as set forth in the remainder of the present application and with reference to the drawings

### SUMMARY

In one embodiment, a system is disclosed for providing virtual services is disclosed. The system includes a processor and a memory communicatively coupled to the processor. The memory stores processor-executable instructions, which, on execution, cause the processor to generate a virtual environment for a service provider offering a plurality of services. The generated virtual environment includes a plurality of conversational prompts and a plurality of user interface (Ul) objects to be rendered to a user. The processor-executable instructions further cause the processor to receive one or more inputs from the user in response to the rendered plurality of conversational prompts and the plurality of UI objects. The processor-executable instructions further cause the processor to determine one or more services desired by the user based on a processing of the received one or more inputs. The processor-executable instructions further cause the processor to provide the desired one or more services to the user based on the determination.

In another embodiment, a method of providing virtual services is disclosed. In one example, the method includes generating, by a virtual services platform, a virtual environment for a service provider offering a plurality of services. The generated virtual environment includes a plurality of conversational prompts and a plurality of user interface (UI) objects to be rendered to a user. The method further includes receiving one or more inputs from the user in response to the rendered plurality of conversational prompts and the plurality of UI objects. The method further includes determining one or more services desired by the user based on a processing of the received one or more inputs. The method further includes providing the desired one or more services to the user based on the determination.

In yet another embodiment, a non-transitory computer-readable medium storing computer-executable instructions for providing virtual services is disclosed. In one example, the stored instructions, when executed by a processor, cause the processor to perform operations including generating a virtual environment for a service provider offering a plurality of services. The generated virtual environment includes a plurality of conversational prompts and a plurality of user interface (UI) objects to be rendered to a user. The operations further include receiving one or more inputs from the user in response to the rendered plurality of conversational prompts and the plurality of UI objects. The operations further include determining one or more services desired by the user based on a processing of the received one or more inputs. The operations further include providing the desired one or more services to the user based on the determination.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 is a block diagram of an exemplary network environment for providing virtual services, in accordance with some embodiments of the present disclosure.
FIG. 2 is a block diagram of exemplary system for providing virtual services, in accordance with some embodiments of the present disclosure.
FIGs. 3A to 3C collectively illustrate exemplary layouts of the virtual bank and the communication between the user and the virtual communicator for providing virtual service, in accordance with some embodiments of the present disclosure.
FIGs. 4A to 4E collectively illustrate exemplary layouts of the virtual bank and the plurality conversational prompts rendered by the virtual communicator for providing a desired service to the user, in accordance with some embodiments of the present disclosure.
FIG. 5 is a flow diagram of a detailed exemplary process for providing services, in accordance with some embodiments of the present disclosure.
FIG. 6 is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

Various implementations may be found in a method and/or a system for providing virtual services. The system includes a processor and a memory communicatively coupled to the processor. The memory stores processor-executable instructions, which, on execution, cause the processor to generate a virtual environment for a service provider offering a plurality of services. The generated virtual environment includes a plurality of conversational prompts and a plurality of user interface (Ul) objects to be rendered to a user.

In an embodiment, the service provider corresponds to a bank and the plurality of services includes one or more services for providing banking services, one or more services for booking appointment, one or more services for exchange of documents, and one or more services for providing customer support.

In an embodiment, the plurality of conversational prompts may be one or more of a textual prompt, an audio prompt, a video prompt. The plurality of conversational prompts includes questions intended to determine one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user. In an embodiment, the plurality of conversational prompts enable communication between the user and the one or more executives using one or more of: a telephone call, a voice over Internet (VoIP) call, a chat, a video conference, email, a screen-sharing session, a whiteboard, and short messaging service (SMS).

For enabling booking of an appointment, the processor may be configured to render one or more conversational prompts from the plurality of conversational prompts for determining one or more of a selection of a date and time of the appointment, selection of a category of requested service, and selection of an executive from the one or more executives. To this end, the processor may be further configured to provide a real-time status indicative of an availability of the one or more executives from the plurality of executives tasked with providing one or more services from the plurality of services.

In an embodiment, the processor may be configured to generate one or more confirmations corresponding to a booked appointment for providing the requested service from the plurality of services. The processor may be further configured to transmit the generated one or more confirmations to the service provider, the executive providing the service, and the user.

In an embodiment, the processor may be configured to provide one or more interface to each executive from the one or more executives for one or more of tracking one or more requests received from a plurality of users corresponding to requested services from the plurality of services; establishing communication with a user from the plurality of users; and generating one or more insights corresponding to the requests serviced by an executive from the one or more executive. In an embodiment, the processor may be further configured to facilitate parallel communication of an executive from the one or more executives with one or more users having a count less than a pre-defined count of users.

The processor-executable instructions further cause the processor to receive one or more inputs from the user in response to the rendered plurality of conversational prompts and the plurality of UI objects. The one or more inputs may be one or more of a textual input, an audio, a video, a multimedia file. The plurality of UI objects includes UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board. The processor may be further configured render the plurality of UI objects on an electronic device associated with the user in a manner to provide a user experience (UX) to the user that emulates a physical experience of the user with the service provider.

The processor-executable instructions further cause the processor to determine one or more services desired by the user based on a processing of the received one or more inputs. In an embodiment, the processing may include process the one or more inputs based on analysis of the one or more inputs to determine one or more features. The processor may be further configured to perform classification of the determined one or more features based on one or more pre-defined domain dictionaries. The processor may be further configured to perform contextual summarization of the one or more inputs based on the classification and weights associated with the one or more dictionaries to determine a context associated with the one or more inputs. The processor may be further configured to perform correlation of the determined context with the plurality of services to determine one or more services desired by the user. The processor-executable instructions further cause the processor to provide the desired one or more services to the user based on the determination.

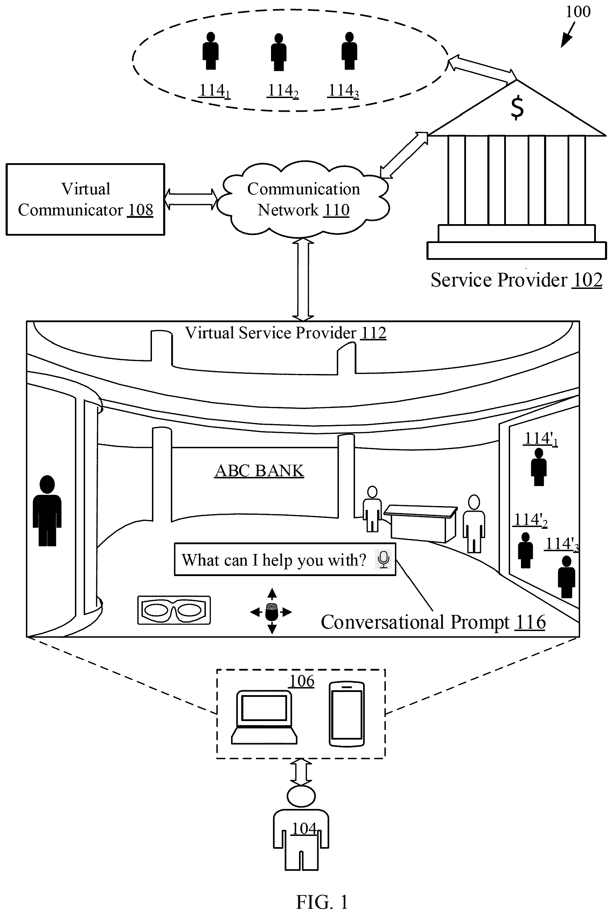

Referring now to FIG. 1, an exemplary network environment 100 for providing virtual services is illustrated in accordance with some embodiments of the present disclosure. The network environment 100 displays a service provider 102, a user 104 from the plurality of users (not shown), electronic device 106, and a virtual communicator 108. The service provider 102, the user 104, the electronic device 106, and the virtual communicator 108 may be communicatively coupled with each other via the communication network 110. In an implementation, the network environment 100 may further include a virtual service provider 112 that may be generated by the virtual communicator 108 and may be rendered on the electronic device 106. A person of ordinary skill in the art will appreciate that for the purpose of illustration, only one user is depicted. However, the virtual service provider 112 may be accessed by a plurality of other users on the associated electronic devices, without limiting the scope of this disclosure.

The service provider 102 may correspond to a financial institution engaging in providing banking services that include, but are not limited to, a bank providing commercial banking services, loans, mortgages, merchant services, treasury services, foreign exchange services, financial counselling and consulting, and the like. For the sake of explanation, the service provider 102 will be referred as bank 102 and the virtual service provider 112 will be referred as virtual bank 112, hereinafter in the following disclosure.

The services may be offered by a plurality of executives 114 (114₁ to 114ₙ) enrolled with the bank. The services may be availed by a plurality of users (such as the user 104) by registering with the bank 102. Such availing of the services may be performed remotely by the user 104 by leveraging the virtual communicator 108 that may be configured to generate a virtual environment 100 of the bank in the form of a virtual bank 112. The virtual bank 112 may include virtual representations of the plurality of executives 114, depicted as plurality of executives 114' (114'₁ to 114'ₙ). The virtual bank 112 (a virtual representation of the bank 102) may be rendered on the electronic device 106 associated with the user 104. Further, the conversational prompt 116 generated by the virtual communicator 108 may be rendered on the electronic device 106.

The electronic device 106 associated with a user 104 may include may include suitable logic, circuitry, interfaces, and/or code for displaying one or more user interfaces (UI) of the virtual bank 112 generated by the virtual communicator 108 on a display screen of the electronic device. Examples of implementation of the display screen of the electronic devices may include, but are not limited to, a Liquid Crystal Display (LCD) display, a Light Emitting Diode (LED) display, an Organic LED (OLED) display technology.

The communication network 110 may include a medium through which the bank 102, the user 104, the electronic device 106, and the virtual communicator 108 present in the network environment 100, may communicate with each other. Examples of the communication network 110 may include, but are not limited to, the Internet, a cloud network, a Wireless Fidelity (Wi-Fi) network, a Wireless Local Area Network (WLAN), a Local Area Network (LAN), a telephone line (POTS), Long Term Evolution (LTE), and/or a Metropolitan Area Network (MAN). Various devices in the exemplary network environment 100 may be configured to connect to the communication network 110, in accordance with various wired and wireless communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), Zigbee, EDGE, infrared (IR), IEEE^{®} 802.11, 802.16, cellular communication protocols, and/or Bluetooth^{®} (BT) communication protocols.

In operation, the virtual communicator may generate a virtual environment for the service provider 102 offering a plurality of services via the plurality of executives 114. The generated virtual environment includes a plurality of conversational prompts and a plurality of user interface (UI) objects to be rendered to the user 104 on the electronic device 106.

The virtual communicator 108 may be render the plurality of UI objects on the electronic device 106 associated with the user 104 in a manner to provide a user experience (UX) to the user that emulates a physical experience of the user with the service provider 102. In other words the arrangement of the UI objects on the UI may be such that user 104 may be able to intuitively navigate a virtual space depicted as the virtual bank 112 on the electronic device 106. The plurality of UI objects may be grouped in one or more sections each corresponding to the one or more categories of services. In an embodiment, when the electronic device 106 supports 3-dimensional (3-D) rendering and devices such as 3-D glasses, the experience of the user 104 emulates the actual 3-D experience of the user when it is physically present in the premises of the bank 102.

In an embodiment, the service provider 102 may correspond to a bank and the plurality of services offered by the bank may include, but are not limited to, services for providing banking services, one or more services for booking appointment, one or more services for exchange of documents, and one or more services for providing customer support.

In an embodiment, the plurality of conversational prompts may be rendered by means of an output generated on the electronic device 106. The output may include, but is not limited to, a textual prompt, an audio prompt, a video prompt.

In an embodiment, the plurality of conversational prompts includes questions intended to determine one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

In an embodiment, the plurality of UI objects may include, but is not limited to, UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board. In another embodiment, the plurality of UI objects includes UI objects corresponding to one or more games oriented towards learning and/or entertainment of the users. The one or more games may be customized in a manner to enhance the financial knowledge of the users. The one or more games may further be customized in a manner to enhance the knowledge regarding the banking processes. Such games may include, but are not limited to, one or more puzzles, crosswords, a hide-and-seek game, a Christmas calendar, and the like

In response to the rendered plurality of conversational prompts and the plurality of UI objects, the virtual communicator 108 may receive one or more inputs from the user 104. The one or more inputs may include, but are not limited to, one or more of a textual input, an audio, a video, a multimedia file.

In an embodiment, the virtual communicator 108 may categorize services into those that can be provided without human intervention and those that involve human intervention. For services that require human intervention, for a service, which is to be availed by the user 104, the virtual communicator 108 may present a list of executives (from the plurality of executives 114') that may service the request. To this end, the virtual communicator 108 may provide a real-time status indicative of an availability of the one or more executives (such as the executive 114₁) from the plurality of executives 114 tasked with providing one or more services from the plurality of services.

In an embodiment, based on the booking, the virtual communicator 108 may generate one or more confirmations corresponding to a booked appointment for providing the requested service from the plurality of services. The virtual communicator 108 may transmit the generated one or more confirmations to the bank 102, the executive 114₁ providing the service, and the user 104.

In another embodiment, for enabling booking of an appointment, the virtual communicator 108 may render one or more conversational prompts from the plurality of conversational prompts for determining one or more of a selection of a date and time of the appointment, selection of a category of requested service, and selection of an executive from the plurality of executives 114' capable of providing the requested service. Based on the received preferred timeslot, the virtual communicator 108 may correlate the availability of an executive who can service the request and accordingly, automatically book the appointment of the user 104 with the executive. The virtual communicator 108 may generate one or more confirmations corresponding to the automatically booked appointment and may transmit the generated one or more confirmations to the selected executive and the user 104.

In an embodiment, the virtual communicator 108 may generate one or more reminders to alert the user 104 and the executive a pre-defined number of days in advance of the date of the appointment. In an embodiment, the virtual communicator 108 may enable the user 104 to change the pre-defined number of days described above along with the number of such reminders that are to be generated. On the approach of the booked timeslot for availing the service, the virtual communicator 108 may present one or more conversational prompts that enable communication between the user 104 and the executive. In an embodiment, the plurality of conversational prompts enable communication between the user 104 and the executive 114₁ using one or more of a telephone call, a voice over Internet (VoIP) call, a chat, a video conference, email, a screen-sharing session, a whiteboard, and short messaging service (SMS).

Furthermore, the virtual communicator 108 may provide one or more interface to each executive (such as the executive 114₁) from the one or more executives for one or more of: tracking one or more requests received from a plurality of users corresponding to requested services from the plurality of services. The interface enables establishing communication with a user from the plurality of users. The interface further enables generating one or more insights corresponding to the requests serviced by an executive from the one or more executive. The interface may further enable the executives in generating one or more insights and create configurable dashboards corresponding to the requests serviced by an executive from the one or more executive. In another embodiment, the virtual communicator 108 may generate an interface for an administrator of the virtual bank 112. Such an at interface may provide a consolidated view to the administrator of the virtual bank 112 with regards to data that includes, but is not limited to, availability of the executives, utilization of the executives, category-wise performance metrics of executives.

In an embodiment, the virtual communicator 108 may facilitate parallel communication of an executive from the one or more executives with one or more users having a count less than a pre-defined count of users.

The virtual communicator 108 may determine one or more services desired by the user 104 based on a processing of the received one or more inputs. In an embodiment, the processing may include processing the one or more inputs based on analysis of the one or more inputs to determine one or more features. The virtual communicator 108 may perform classification of the determined one or more features based on one or more pre-defined domain dictionaries. The virtual communicator 108 may further perform contextual summarization of the one or more inputs based on the classification and weights associated with the one or more dictionaries to determine a context associated with the one or more inputs. The virtual communicator 108 may perform correlation of the determined context with the plurality of services to determine one or more services desired by the user 104.

Based on the determined one or more desired services, virtual communicator 108 may expand a list of options available in a category, or to specifically select a service. In case the specific service which may be desired by the user 104 is determined, the virtual communicator 108 may provide the desired one or more services to the user 104.

In an embodiment, the virtual communicator 108, via one or more conversational prompts may enable the user 104 to provide feedback corresponding to a service availed the user 104 from an executive. The collected feedback may be used by the virtual communicator 108 in collectively analyzing the performance of the executives. In an embodiment, the virtual communicator 108 may further generate category-wise ratings based on the feedback. The ratings may be rendered on the electronic device 106 at the time of booking a service. The ratings may further be used by the virtual communicator 108 in providing incentives to the executives.

A person of ordinary skill in the art will appreciate that for services that do not require human intervention, the virtual communicator 108 may provide a service to the user 104 that corresponds to the selected UI object by the user 104.

It should be noted that the various components of the system disclosed above may be implemented in programmable hardware devices such as programmable gate arrays, programmable array logic, programmable logic devices, and so forth. Alternatively, the various modules described above may be implemented in software for execution by various types of processors. An identified module of executable code may, for instance, include one or more physical or logical blocks of computer instructions which may, for instance, be organized as an object, procedure, function, engine, or other construct. Nevertheless, the executables of an identified module need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for transmitting data over a communication network 110. For example, the exemplary network environment 100 may transmit data over a communication network 110 by the processes discussed herein. In particular, as will be appreciated by those of ordinary skill in the art, control logic and/or automated routines for performing the techniques and steps described herein may be implemented by the network environment 100, either by hardware, software, or combinations of hardware and software. For example, suitable code may be accessed and executed by the one or more processors on the network environment 100 to perform some or all of the techniques described herein. Similarly, application specific integrated circuits (ASICs) configured to perform some or all of the processes described herein may be included in the one or more processors on the network environment 100.

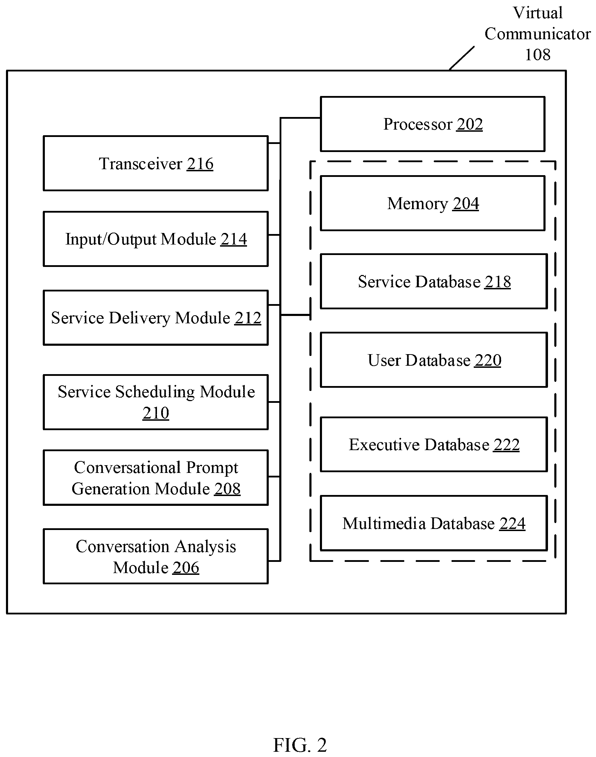

FIG. 2 is a block diagram of exemplary system for providing virtual services by the virtual communicator 108, in accordance with some embodiments of the present disclosure. FIG. 2 is explained in conjunction with elements from FIG. 1. With reference to FIG. 2, there is shown the virtual services platform 112 that may include one or more processors, such as a processor 202, a memory 204, a conversation analysis module 206, conversational prompt generation module 208, a service scheduling module 210, a service delivery module 212, an input/output (I/O) module 214, and/or a transceiver 216. In an implementation, the memory 204 may include a plurality of databases that may be integrated into the memory 204. The databases may include a services database 218, a user database 220, an executive database 222, and/or a multimedia database 224. The processor 202 may be communicatively coupled to the memory 204, the conversation analysis module 206, the conversational prompt generation module 208, the service scheduling module 210, the service delivery module 212, the I/O module 214, and/or the transceiver 216.

The processor 202 may include suitable logic, circuitry, interfaces, and/or code that may be configured to execute a set of instructions stored in the memory 204. The processor 202 may be configured to generate a virtual environment 100 of the bank 102. The processor 202 may be further configured to receive one or more inputs representing request for availing services by the user 104. The processor 202 may extract desired service to be availed by the user from the one or more inputs and may coordinate the executives 114 to service the request. To this end, the processor 202 may correlate the availability of the executives with the preferred schedule for availing the service. Examples of the processor 202 may be an X86-based processor, a Reduced Instruction Set Computing (RISC) processor, an Application-Specific Integrated Circuit (ASIC) processor, a Complex Instruction Set Computing (CISC) processor, and/or other processors.

The memory 204 may include suitable logic, circuitry, and/or interfaces that may be configured to store a machine code and/or a computer program with at least one code section executable by the processor 202. Examples of implementation of the memory 204 may include, but are not limited to, Random Access Memory (RAM), Read Only Memory (ROM), Hard Disk Drive (HDD), and/or a Secure Digital (SD) card.

In an implementation, the memory 204 may be integrated with the plurality of databases, such as the services database 218, the user database 220, the executive database 222, and/or the multimedia database 224. The services database 218 may be configured to store the details of the banking services offered by the bank 102 via the virtual bank 112. The user database 220 may be configured to store the details of the plurality of users that register with the bank 102 for availing the banking services offered by the bank 102 via the virtual bank 112. The executive database 222 may be configured to store the details of the plurality of executives 114 registered with the bank 102 for providing the banking services, via the virtual bank 112. The executive database 220 may be further configured to store the relationship between a registered executives and the one or more service that may be offered by the executive. The multimedia database 224 may be configured to store multimedia content that may be rendered in the display zone of the virtual bank 112. Such data may include, but is not limited to, a stock price listings, real-time news flashes, advertisements, weather information, listing of banking services provided by the bank, one or more tutorials for availing the listed services, Universal Resource Locator (URLs) corresponding to social networking pages of the bank, and notice board. A person of ordinary skill in the art will appreciate that the data stored in the databases described above may be stored in a structured or an unstructured data format. Examples of implementation of the databases described above may include, but are not limited to, secure databases such as Amazon Web Services Cloud (AWS^{®}), Microsoft Azure^{®}, Cosmos DB^{®}, Oracle^{®} Database, Sybase^{®}, MySQL^{®}, Microsoft Access^{®}, Microsoft SQL Server^{®}, FileMaker Pro^{™}, and dBASE^{®}. A person of ordinary skill in the art will appreciate that in an alternate implementation, the databases described above may be implemented as an entity that may be separate from the memory 204, without limiting the scope of this disclosure.

The conversation analysis module 206 may include suitable logic, circuitry, interfaces, and/or code that may be configured to analyze the one or more inputs received from the user 104. The analyses may be performed based on machine learning techniques that include, but are not limited to, supervised learning, unsupervised learning, regression, classification, clustering, dimensionality reduction, and neural network analysis. In an implementation, when the one or more inputs include textual data, speech, and/or audio the analysis may be based on Natural Language Processing (NLP). In an implementation, when the one or more inputs include images, video, and/or graphics, the analyses may be performed based on techniques that include, but are not limited to, object detection, object recognition, and segmentation.

The conversational prompt generation module 208 may include suitable logic, circuitry, interfaces, and/or code that may be configured to generate one or more conversational prompts in response to the analyses of the one or more inputs by the conversation analysis module 206. The conversational prompt generation module 208 may be further configured to correlate the analyses with data regarding the plurality of services and the plurality of executives present in the respective databases.

The service scheduling module 210 may include suitable logic, circuitry, interfaces, and/or code that may be configured to provide the necessary conversational prompts and/or UI objects to the users on the interface of the virtual bank 112, to facilitate the selection of a preferred schedule for availing one or more services offered by the bank 102. The service scheduling module 210 may be implemented based on technologies that include, but are not limited to, Luware^{®}, Genesys cloud^{®}, CloudTalk^{®}, Office 365^{®} application suite (such as Teams, Bookings, Forms, Sharepoint, etc.).

The service delivery module 212 may include suitable logic, circuitry, interfaces, and/or code that may be configured to provide the necessary applications to the executives and the users to transactions facilitating exchange of services, via the virtual bank 112. The service delivery module 212 may be implemented based on technologies that include, but are not limited to, Luware^{®}, Genesys cloud^{®}, CloudTalk^{®}, Office 365^{®} application suite (such as Teams, Bookings, Forms, etc.).

The I/O module 214 may include suitable logic, circuitry, interfaces, and/or code that may be configured to render, to the UI objects generated by the processor 202 on the electronic devices of the users and the executives. The I/O module 212 may include various input and output devices that may be configured to facilitate the communication between the plurality of executives and the users via the virtual bank 112. In an implementation, the services of the bank 102 may be offered via the virtual bank 112, based on one or more electronic devices (such as the electronic device 106) associated with the users (such as the user 104). It is such one or more electronic devices that, in conjunction with the I/O module 212, may be configured to display one or more interfaces of the virtual bank 112. The I/O module 212 may further facilitate generation and rendering of interfaces on the display screens of the electronic devices associated with the plurality of executives 114. Examples of the display screen may include, but are not limited to, Liquid Crystal Display (LCD) display, Light Emitting Diode (LED) display, Organic LED (OLED) display technology, and/or the like.

In an implementation, the I/O module 214 may be further equipped with a photographic optical system, such as a photographic lens and/or a zoom lens, as well as one or more image sensors, such as a charge-coupled device (CCD) or a complementary metal-oxide-semiconductor (CMOS), a digital camera, a camera embedded in a personal digital assistant (PDA), a video camera, and/or a motion camera. A person of ordinary skill in the art will appreciate that the I/O module 214 may further include one or more audio based output devices for enabling communication with a user and an executive.

The transceiver 216 may include suitable logic, circuitry, interfaces, and/or code that may be configured to facilitate communication among the plurality of users and the plurality of executives 114. The transceiver 216 may be implemented based on known technologies to support wired or wireless communication. The transceiver 216 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The transceiver 216 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM^{®}), Enhanced Data GSM Environment (EDGE^{®}), wideband code division multiple access (W-CDMA^{®}), code division multiple access (CDMA^{®}), Long Term Evolution (LTE^{®}), time division multiple access (TDMA), Bluetooth^{®}, Wireless Fidelity (Wi-Fi^{®}) (such as IEEE^{®} 802.11a, IEEE^{®} 802.11b, IEEE 802.11g and/or IEEE^{®} 802.11n), voice over Internet Protocol (VolP^{®}), Wi-MAX^{®}, a protocol for email, instant messaging, and/or Short Message Service (SMS).

In operation, the service provider 102 may correspond to a bank and the plurality of services offered by the bank may include, but are not limited to, services for providing banking services, one or more services for booking appointment, one or more services for exchange of documents, and one or more services for providing customer support.

In an embodiment, the processor 202 in conjunction with the I/O module 214 may generate a virtual environment 100 for the service provider 102 offering a plurality of services via the plurality of executives 114. The virtual bank 112 may include a plurality of conversational prompts and a plurality of user interface (UI) objects, each corresponding to a plurality of services and/or the plurality of executive 114 enrolled with the bank 102. The plurality of services may be categorized in one or more categories, and wherein each of the one or more categories of services may be associated with one or more executive from the plurality of executives 114'.

In an embodiment, the plurality of services includes one or more services for providing banking services, one or more services for booking appointment, one or more services for exchange of documents, and one or more services for providing customer support. To this end, the processor 202 may refer to the services database 218 and the executive database 222 of the memory 204. In an embodiment, the processor 202 in conjunction with the I/O module 214 may be configured to support 3-D rendering of the virtual bank 112 via the electronic device 104 that may include, but are not limited to, 3-D glasses. The aim is to provide an experience to the user 104 that emulates the actual 3-D experience of the user when it is physically present in the premises of the bank 102.

In an embodiment, the processor 202, in conjunction with the I/O module 214, may be configured to render the plurality of conversational prompts on the electronic device 106. The generation may be based on outputs that include, but are not limited to, a textual prompt, an audio prompt, a video prompt. The plurality of conversational prompts includes, but is not limited to, questions intended to determine one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

In an embodiment, the plurality of UI objects may include, but is not limited to, UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board. In another embodiment, the plurality of UI objects includes UI objects corresponding to one or more games oriented towards learning and/or entertainment of the users. The one or more games may be customized in a manner to enhance the financial knowledge of the users. The one or more games may further be customized in a manner to enhance the knowledge regarding the banking processes. Such games may include, but are not limited to, one or more puzzles, crosswords, a hide-and-seek game, a Christmas calendar, and the like

In response to the rendered plurality of conversational prompts and the plurality of UI objects, the processor 202, in conjunction with the I/O module 214, may be configured to receive one or more inputs from the user 104. The one or more inputs may include, but are not limited to, one or more of a textual input, an audio, a video, a multimedia file.

In an embodiment, the processor 202 may be configured to categorize services into those that can be provided without human intervention and those that involve human intervention. For services that require human intervention, for a service, which is to be availed by the user 104, the processor 202, in conjunction with the services database 218, the executive database 222, and the I/O module 214, may be configured to present a list of executives (from the plurality of executives 114') that may service the request. To this end, the processor 202 may be configured to provide a real-time status indicative of an availability of the one or more executives (such as the executive 114'₁) from the plurality of executives 114 tasked with providing one or more services from the plurality of services.

In an embodiment, based on the booking request received from the user 104, the processor 202 may be configured to generate one or more confirmations corresponding to a booked appointment for providing the requested service. The processor 202, in conjunction with the transceiver 216, may be configured to transmit the generated one or more confirmations to the bank 102, the executive 114₁ providing the service, and the user 104.

In another embodiment, for enabling booking of an appointment, the processor 202, in conjunction with the conversational prompt generation module 208 and the I/O module 214, may be configured to render one or more conversational prompts for determining one or more services desired by the user 104. In an embodiment, the processor 202, in conjunction with the conversation analysis module 206, may be configured to determine one or more services desired by the user 104 based on a processing of the received one or more inputs. In an embodiment, the processing may include processing the one or more inputs based on analysis of the one or more inputs to determine one or more features. The processor 202, in conjunction with the conversation analysis module 206, may be further configured to perform classification of the determined one or more features based on one or more pre-defined domain dictionaries. The processor 202, in conjunction with the conversation analysis module 206, may be further configured to perform contextual summarization of the one or more inputs based on the classification and weights associated with the one or more dictionaries to determine a context associated with the one or more inputs. The processor 202, in conjunction with the conversation analysis module 206, may be further configured to perform correlation of the determined context with the plurality of services to determine one or more services desired by the user 104.

Based on the determined one or more desired services, processor 202, in conjunction with the services database 218, may be configured to expand a list of options available in a category, or to specifically select a service. In case the specific service which may be desired by the user 104 is determined, the processor 202 may be configured to provide the desired one or more services to the user 104.

In an embodiment, based on the processing of the received one or more inputs, the processor 202 may be configured to determine a selection of a date and time of the appointment, selection of a category of requested service, and selection of an executive from the plurality of executives 114' capable of providing the requested service. Based on the received preferred timeslot, the processor 202, in conjunction with executive database 222, may be configured to correlate the availability of an executive who can service the request and accordingly, automatically book the appointment of the user 104 with the executive.

In an embodiment, upon booking, the processor 202, in conjunction with the transceiver 216, may be configured to generate one or more confirmations corresponding to the automatically booked appointment and transmit the generated one or more confirmations to the selected executive and the user 104.

In an embodiment, the processor 202 may be configured to generate one or more reminders to alert the user 104 and the executive a pre-defined number of days in advance of the date of the appointment. The processor 202, in conjunction with the I/O module 214, may be configured to enable the user 104 to change the pre-defined number of days described above along with the number of such reminders that are to be generated. On the approach of the booked timeslot for availing the service, the processor 202, in conjunction with the I/O module 214, may be configured to present one or more conversational prompts that enable communication between the user 104 and the executive. In an embodiment, for enabling the establishment of a communication session between the user 104 and an executive, the processor 202 may use one or more of a telephone call, a voice over Internet (VoIP) call, a chat, a video conference, email, a screen-sharing session, a whiteboard, and short messaging service (SMS).

In an embodiment, the processor 202, in conjunction with the service delivery module 212 and the I/O module 214, may be configured to provide one or more interface to each executive from the plurality of executives 114'. The interface may enable each executive to perform operation that include tracking one or more requests received from a plurality of users corresponding to requested services from the plurality of services. The interface enables establishing communication with a user from the plurality of users. The interface further enables generating one or more insights corresponding to the requests serviced by an executive from the one or more executive. The interface may further enable the executives in generating one or more insights and create configurable dashboards corresponding to the requests serviced by an executive from the one or more executive.

In another embodiment, the processor 202, in conjunction with the I/O module 214, may be configured to generate an interface for an administrator of the virtual bank 112. Such an interface may provide a consolidated view to the administrator of the virtual bank 112 with regards to data that includes, but is not limited to, availability of the executives, utilization of the executives, category-wise performance metrics of executives.

In an embodiment, the processor 202 may be configured to facilitate parallel communication of an executive from the one or more executives with one or more users having a count less than a pre-defined count of users.

In an embodiment, the processor 202, in conjunction with the I/O module 214, may be configured to leverage the one or more conversational prompts in enabling the user 104 to provide feedback corresponding to a service availed the user 104 from an executive. The collected feedback may be used by the virtual communicator 108 in collectively analyzing the performance of the executives. In an embodiment, processor 202 may be further configured to generate category-wise ratings based on the feedback. The ratings may be rendered on the electronic device 106 at the time of booking a service, in conjunction with the I/O module 214. The ratings may further be used by the virtual communicator 108 in providing incentives to the executives.

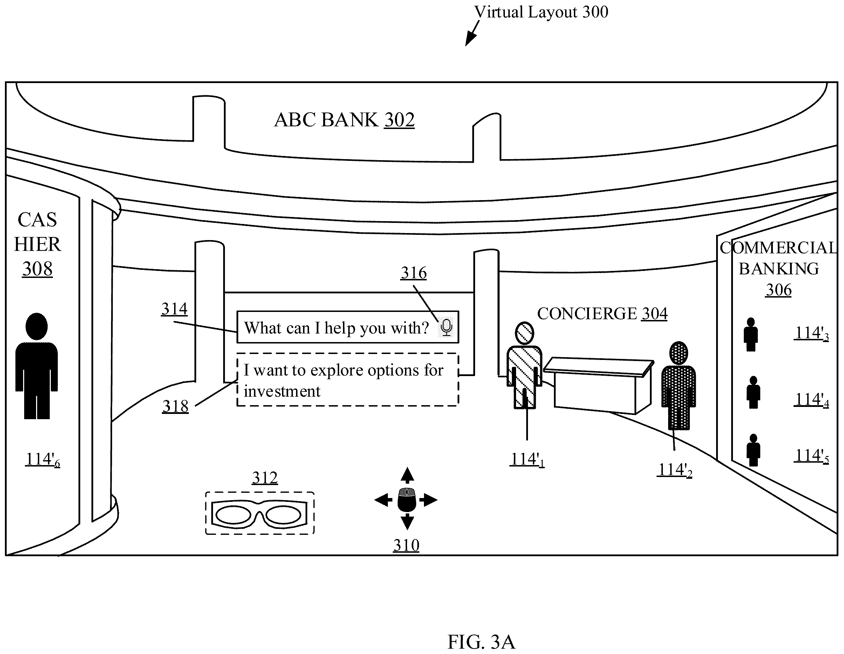

FIGs. 3A to 3C collectively illustrate exemplary layouts of the virtual bank and the communication between the user and the virtual communicator for providing virtual service, in accordance with some embodiments of the present disclosure. With reference to FIGs. 3A to 3C, there is shown an exemplary virtual layout 300 of the bank 102 depicting a conversation between the virtual communicator 108 and the user 104, in which the virtual communicator 108 attempts to identify and provide a service to the user 104.

The exemplary virtual layout 300 of the virtual bank 112 includes an exemplary bank 102 (such as the bank "ABC"). The processor 202 may be configured to provide an option to an administrator of the bank to customize the layout using the logo 302 of the bank.

Further, the virtual layout 300 includes a plurality of UI objects corresponding to the plurality of services offered by the bank 102. In an exemplary scenario, the services offered by the bank may include concierge services denoted using UI object 304, commercial banking services denoted using UI object 306, and cashier services denoted using UI object 308. Furthermore, the bank 102 may depute a plurality of executives for providing each of the services described above. For example, the executives 114₁ to 114₃ may be deputed to provide concierge services 304. In the virtual layout 300, the executives 114₁ to 114₂ may be denoted by UI objects 114'₁ to 114'₂. Similarly, the executives 114₃ to 114₅ may be deputed to provide commercial banking services 306. In the virtual layout 300, the executives 114₃ to 114₅ may be denoted by UI objects 114'₃ to 114'₅. On similar lines, the executive 114₆ may be deputed to provide cashier services 308. In the virtual layout 300, the executive 114₆ may be denoted by UI object 114'₆.

The virtual layout 300 further includes a plurality of UI objects that enable the user 104 to traverse various sections of the layout by interacting with the UI object 310 that assists in navigation. Additionally, for providing a 3-D UX, the processor 202 may further provide a UI object 312 that enables a user to interact with a 3-D version of the virtual layout 300 (as explained in FIGs. 1 and 2).

In an exemplary scenario, the processor 202, in conjunction with the conversational prompt generation module 208, may be configured to render a conversational prompt 314 on the virtual layout 300. The conversational prompt 314 may be presented to the user 104 and may be intended to determine which service is desired by the user 104. The exemplary conversational prompt 314 may include a sentence, "What can I help you with?". Further, the processor 202 may provide a UI object 316 indicating to the user 104 that the response to the conversational prompt 314 can be provided by a voice command.

In response to the conversational prompt, the user 104 may provide a input 318 that may be a sentence expressing a desire for exploring the investment options offered by the bank 102. In an exemplary scenario, the sentence for the input 318 may be, "I want to explore options for investment."

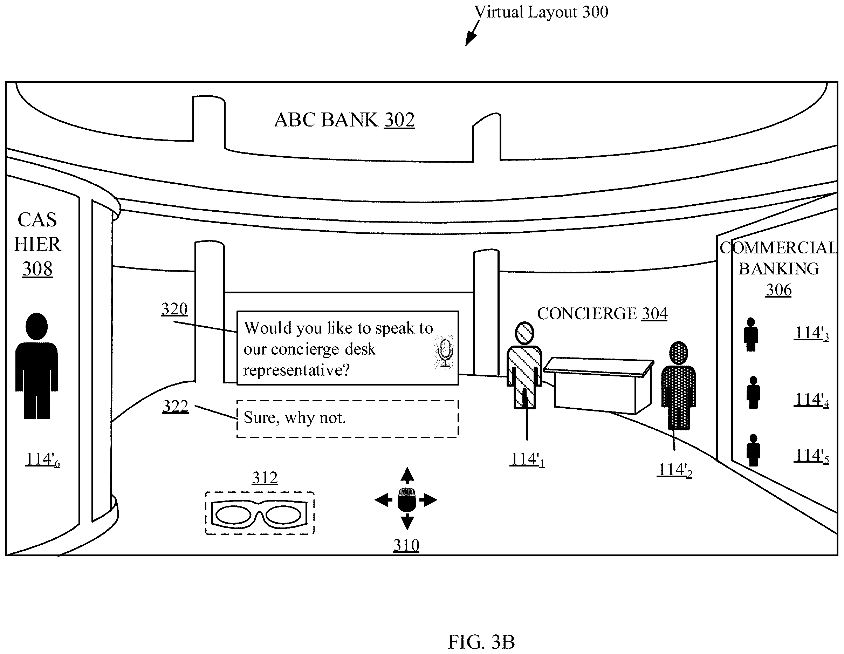

The processor 202, in conjunction with the conversation analysis module 206, may be configured to analyze the input 318. The analysis may be based on the processing of the input 318, as explained in detail in FIGs. 1 and 2. Based on the analysis, the processor 202, in conjunction with the services database 218, may be configured to determine that the concierge services offered by the bank 102 may be best suited for providing the service to the user 104. Accordingly, as illustrated in FIG. 3B, the processor 202, in conjunction with conversational prompt generation module 208, may be configured to generate and render another prompt 320 to the user 104. The conversational prompt 320 may pose a question to the user 104 proposing whether the user 104 would like to speak to a concierge desk executive. Specifically, the conversational prompt 320 may include a question, "Would you like to speak to our concierge desk representative?"

In response to the conversational input 320, the user 104 may provide an input 322 indicating an interest in going ahead with the proposition. To this end, the user 104 may provide the input 322 that may be a sentence conveying, "Sure, why not". Here, processor 202, in conjunction with the conversation analysis module 206, may be configured to determine an intent of the user 104. Based on the application of Al techniques for analyzing the intent from the user's utterances, the processor 202 may be configured to determine that user 104 agrees to the proposition of the conversational prompt 320.

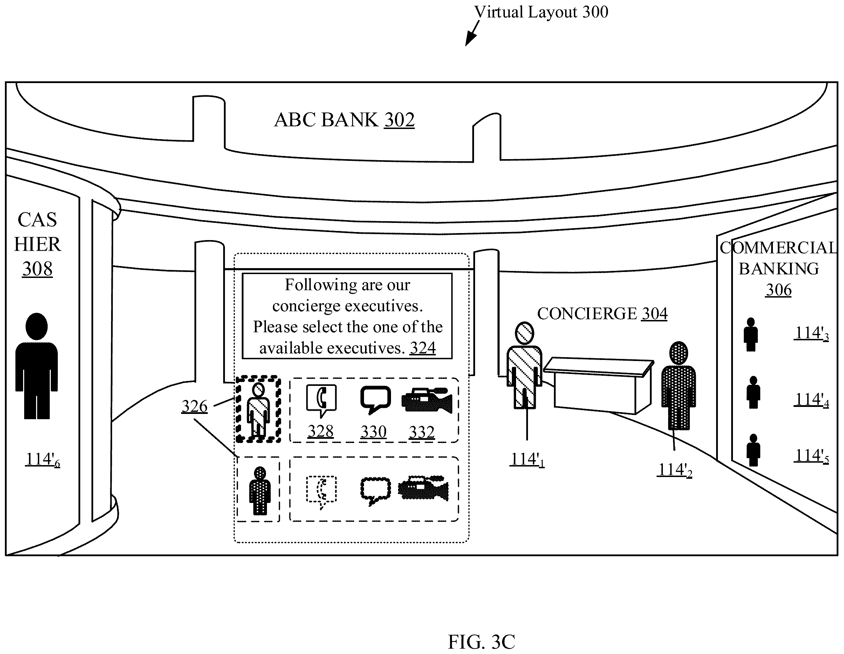

Accordingly, in FIG. 3C, the processor 202, in conjunction with the service database 218 and the executive database 222, may be configured to determine a list of executives responsible for providing concierge service 304. The determined executives may be 114₁ and 114₂. However, in an exemplary scenario, only the executive 114₁ may be online whereas the executive 114₂ may be offline and not available for providing the service. The processor 202, in conjunction with the conversational prompt generation module 308 and the I/O module 214, may be configured to generate and render conversational prompt 324. The conversational prompt 324 may specify, via a sentence such as "Following are the details of our concierge executives. Please select one of the available executives", may prompt the user 104 to select an available executive. To this end, the processor 202 may be configured to render the availability status of the executives 114₁ and 114₂. As can be seen from the virtual layout 300, the executives that may be available to provide service or is online (executive 114'₁) is depicted in doubly highlighting whereas the executive 114'₂ that may be offline is depicted in single dotted box.

Additionally, the processor 202 may be further configured to display UI objects 318, 320, and 322 that correspond to the options for establishing a phone, chat, and video based communication between the user 104 and the executives 114'₁ and 114'₂. Similar to the delineated depiction of the online status of the concierge executives, the UI objects 328, 330, and 332 may be separately highlighted for the executives depending on their online statuses. For executive 114'₁ that may be online, the UI objects 318, 320, and 322 are depicted using solid lines, whereas for the executive 114'₁ that may be online, the UI objects 318, 320, and 322 are depicted using dotted line.

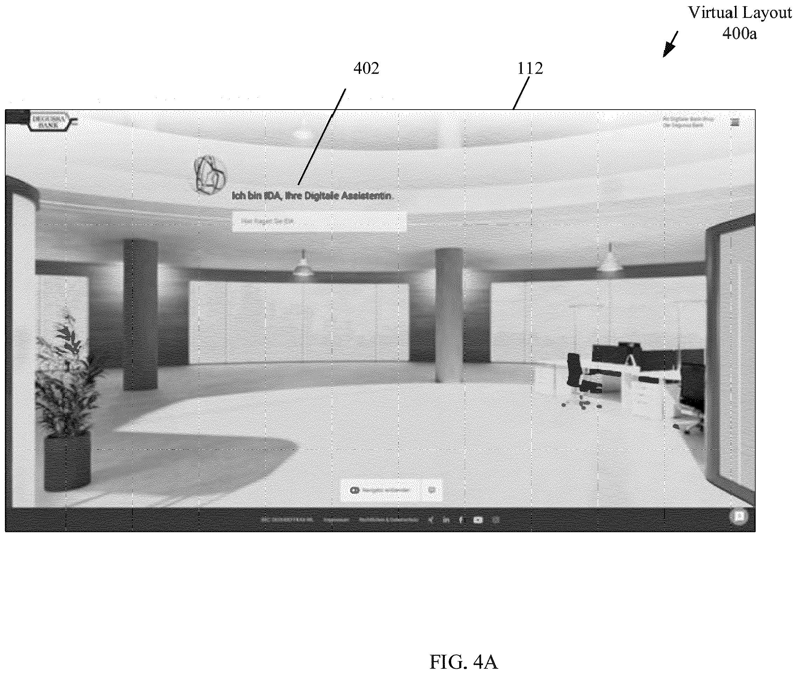

FIGs. 4A to 4E collectively illustrate exemplary layouts of the virtual bank and the plurality conversational prompts rendered by the virtual communicator for providing a desired service to the user, in accordance with some embodiments of the present disclosure. With reference to FIGs. 4A to 4E, there are shown exemplary virtual layouts 400a to 400e of the bank 102 depicting the plurality conversational prompts rendered by the virtual communicator for providing a desired service to the user.

The processor 202 may be configured to provide the plurality of conversational prompts in a plurality of languages. In an exemplary scenario, the language depicted in the conversational prompt of the virtual layout 400a may be German. FIG. 4A, depicts a conversational prompt 402 on the virtual bank 112 that displays, "Ich bin IDA, ihre Digitale Assistentin" to the user 104.

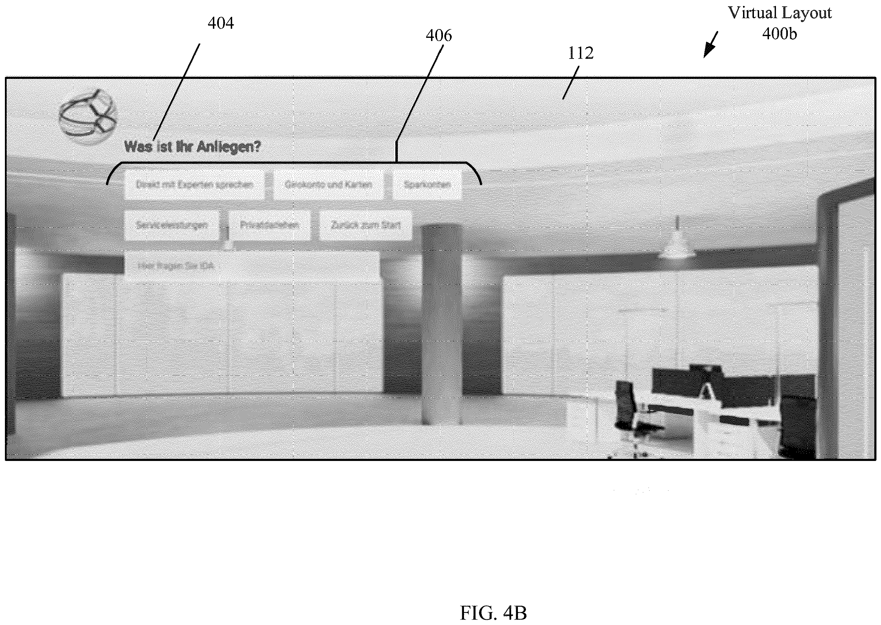

FIG. 4B, depicts a virtual layout 400b that includes a conversational prompt 404 that displays, "Was ist ihr Anliegen?" on the virtual bank 112. The virtual layout 400b also specifies the plurality of services 406 to the user 104 for selection via the one or more inputs.

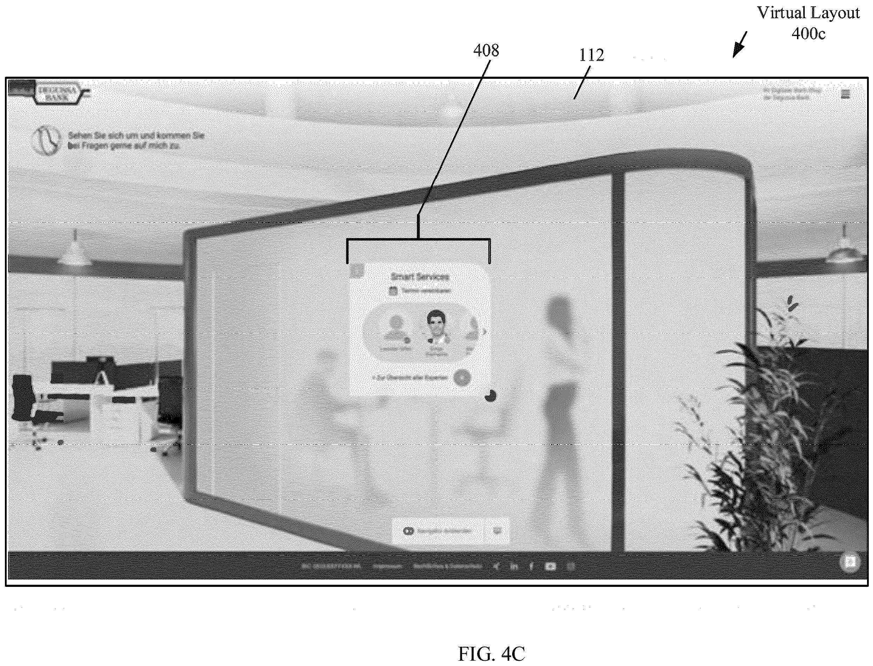

FIG. 4C, depicts a virtual layout 400c that is displayed when the user 104 specifies an intention for availing the service relating to "Smart Service" offering of the bank 102. The virtual communicator 108 accordingly presents one or more UI objects 408 to the user 104 that includes details of the plurality of executives 114 that can provide the requested service.

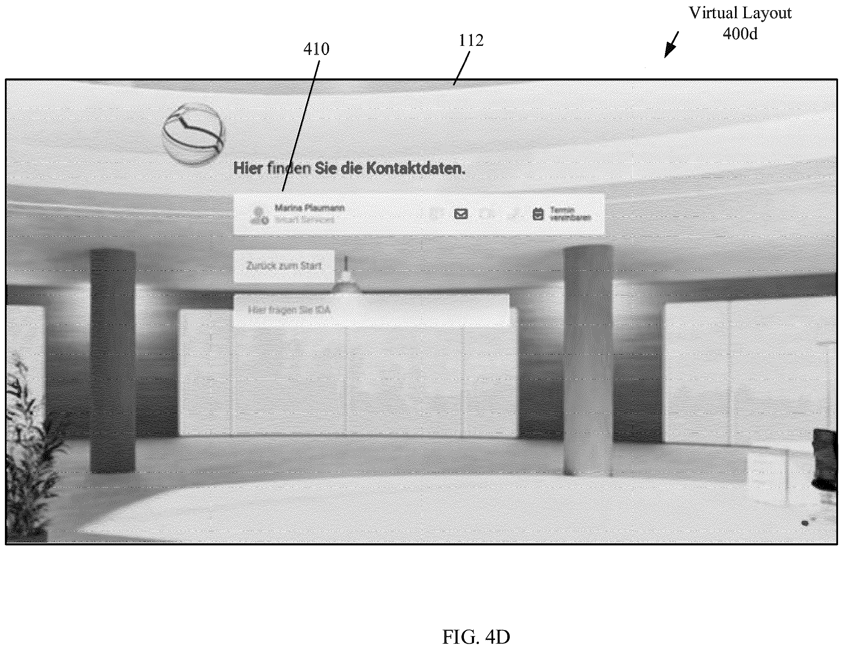

FIG. 4D, depicts a virtual layout 400d that is displayed when the user 104 specifies a user from whom the user intends to interact. Upon selection of the user, the virtual communicator 108 displays a plurality of UI objects 410 that enable establishment of communication channel between the user and the chosen executive. The channel may correspond to a chat, a video, an audio, or an e-mail based communication channel. Furthermore, the virtual communicator 108 may further display one or more UI objects that allow the user 104 to book a preferred timeslot for establishing the communication channel.

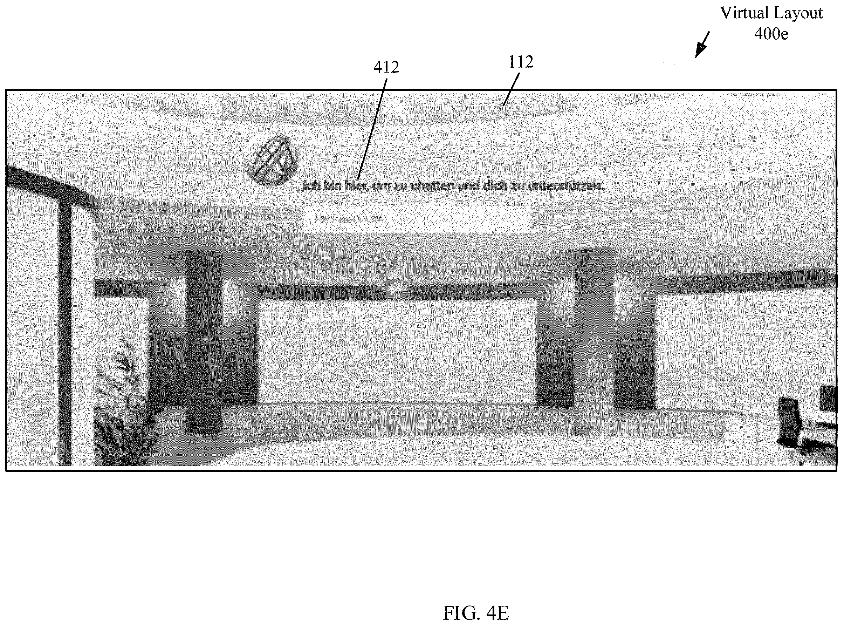

FIG. 4E, depicts a virtual layout 400e that displays a conversational prompt 412 informing the user 104 about the capability of the virtual communicator 108 to act as a chatbot for providing one or more services offered by the bank 102.

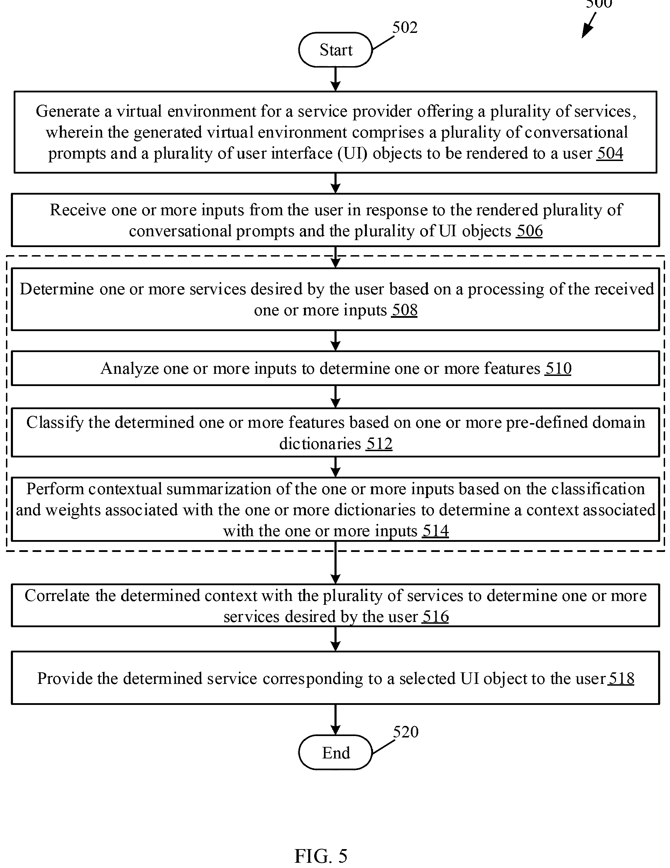

FIG. 5 is a flow diagram of a detailed exemplary process for providing services, in accordance with some embodiments of the present disclosure. With reference to FIG. 5, there is shown a flow chart 500. The flow chart 500 is described in conjunction with FIG's. 1 to 4. The process starts at step 502 and proceeds to step 504.

At step 504, a virtual environment for a service provider offering a plurality of services may be generated. The generated virtual environment includes a plurality of conversational prompts and a plurality of user interface (UI) objects to be rendered to a user. The service provider may correspond to a bank and the plurality of services may include one or more services for providing banking services, one or more services for booking appointment, one or more services for exchange of documents, and one or more services for providing customer support. The one or more conversational prompts are one or more of: a textual prompt, an audio prompt, a video prompt. The plurality of conversational prompts includes questions intended to determine: one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

At step 506, one or more inputs may be received from the user 104 in response to the rendered plurality of conversational prompts and the plurality of UI objects. The one or more inputs may be one or more of: a textual input, an audio, a video. At step 508, one or more services desired by the user may be determined based on a processing of the received one or more inputs a request. At step 510, the processing may be based on analysis of the one or more inputs to determine one or more features. At step 512, the determined one or more features may be classified based on one or more pre-defined domain dictionaries.

At step 514, a contextual summarization of the one or more inputs may be performed based on the classification and weights associated with the one or more dictionaries to determine a context associated with the one or more inputs. At step 516, the determined context may be correlated with the plurality of services to determine one or more services desired by the user. At step 518, the requested service may be provided to the user. The control passes to end step 520.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

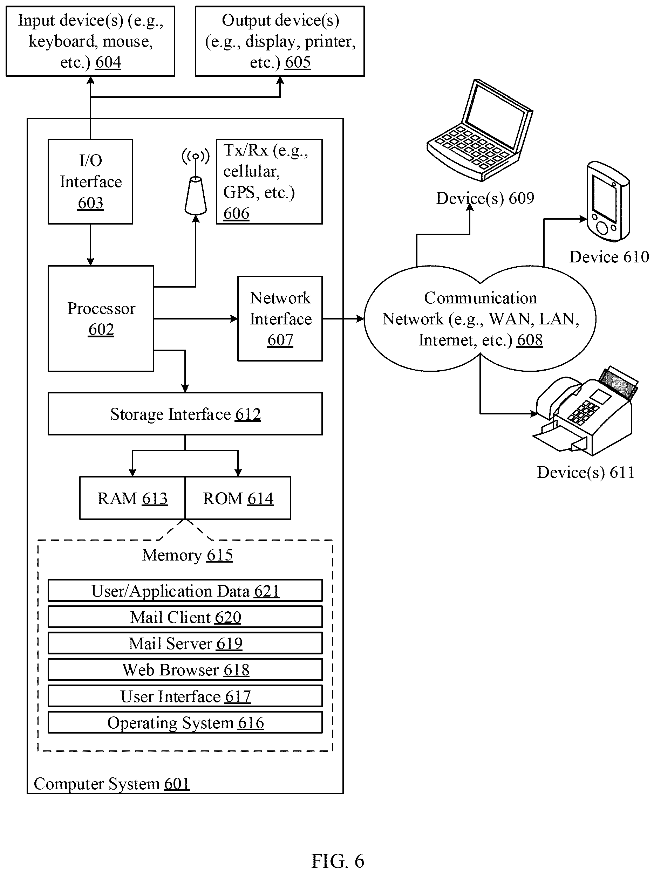

The disclosed methods and systems may be implemented on a conventional or a general-purpose computer system, such as a personal computer (PC) or server computer. Referring now to FIG. 6, a block diagram of an exemplary computer system 601 for implementing embodiments consistent with the present disclosure is illustrated. Variations of computer system 601 may be used for implementing network environment 100 for transmitting data over a communication network 108. Computer system 601 may include a central processing unit ("CPU" or "processor") 602. Processor 602 may include at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver 606 may facilitate various types of wireless transmission or reception. For example, the transceiver 606 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 609, 610, and 611. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. (e.g., past ticket repository, keywords, Ngrams, clusters or categories, relationship mapping, user queries, resolutions, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide a playful, interactive, and graphical interface in a way that the website provides a significantly immersive and an interactive banking experience when compared to internet banking. Further, owing to the intuitive nature of the interfaces and the conversational prompts, the entry barriers for prospective and existing customers for using the technology is low thereby making the solution publicly accessible. The proposed system enables a user to avail the services without having prior knowledge about the services. To this end, the conversation dialogue based determination of the requirements of the users and subsequent rendering of the services leads to a further lowering of the entry barrier for the users who are not aware about the specifics of the offerings of a service provider.

Further, when compared to internet banking, the proposed invention enables the users to enter into directly interact with bank executives by selecting a best suited executive to provide a service. The proposed embodiment further provide a customizable solution whereby different organizations may generate a customized layout. Furthermore, the proposed embodiments provide an integrated platform whereby a user can select a preferred mode of communication with the executives.

The specification has described system and method for providing virtual services. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A system for providing virtual services, the system comprising:
a processor; and
a memory storing instructions for execution by the processor, wherein the hardware processor is configured by the instructions to:
generate a virtual environment for a service provider offering a plurality of services, wherein the generated virtual environment comprises a plurality of conversational prompts and a plurality of user interface (Ul) objects to be rendered to a user;
receive one or more inputs from the user in response to the rendered plurality of conversational prompts and the plurality of UI objects;
determine one or more services desired by the user based on a processing of the received one or more inputs; and
provide the desired one or more services to the user based on the determination.

2. The system of claim 1, wherein the processor is further configured to process the one or more inputs based on:
analysis of the one or more inputs to determine one or more features;
classification of the determined one or more features based on one or more pre-defined domain dictionaries;
performing contextual summarization of the one or more inputs based on the classification and weights associated with the one or more dictionaries to determine a context associated with the one or more inputs; and
correlating the determined context with the plurality of services to determine one or more services desired by the user.

3. The system of claim 1, wherein the plurality of conversational prompts are one or more of: a textual prompt, an audio prompt, a video prompt.

4. The system of claim 1, wherein the one or more inputs is one or more of: a textual input, an audio, a video, a multimedia file.

5. The system of claim 1, wherein the plurality of conversational prompts comprises questions intended to determine: one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

6. The system of claim 1, wherein the service provider corresponds to a bank and the plurality of services comprises one or more services for providing banking services, one or more services for booking appointment, one or more services for exchange of documents, and one or more services for providing customer support.

7. The system of claim 6, wherein for enabling booking of an appointment, the processor is configured to render one or more conversational prompts from the plurality of conversational prompts for determining: selection of a date and time of the appointment, selection of a category of requested service, and selection of an executive from the one or more executives.

8. The system of claim 7, wherein the processor is further configured to provide a real-time status indicative of an availability of the one or more executives from the plurality of executives tasked with providing one or more services from the plurality of services.

9. The system of claim 7, wherein the processor is configured to:
generate one or more confirmations corresponding to a booked appointment for providing the requested service from the plurality of services; and
transmit the generated one or more confirmations to the service provider, the executive providing the service, and the user.

10. The system of claim 5, wherein the plurality of conversational prompts enable communication between the user and the one or more executives using one or more of: a telephone call, a voice over Internet (VoIP) call, a chat, a video conference, email, a screen-sharing session, a whiteboard, and short messaging service (SMS).

11. The system of claim 5, wherein the processor is configured to provide one or more interface to each executive from the one or more executives for one or more of:
tracking one or more requests received from a plurality of users corresponding to requested services from the plurality of services;
establishing communication with a user from the plurality of users; and
generating one or more insights corresponding to the requests serviced by an executive from the one or more executive.

12. The system of claim 11, the processor is configured to facilitate parallel communication of an executive from the one or more executives with one or more users having a count less than a pre-defined count of users.

13. The system of claim 1, wherein the plurality of UI objects comprises UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board.

14. The system of claim 1, wherein the plurality of UI objects are rendered on an electronic device associated with the user in a manner to provide a user experience (UX) to the user that emulates a physical experience of the user with the service provider.

15. A method of providing virtual services, the method comprising:
generating, by a virtual communicator, a virtual environment for a service provider offering a plurality of services, wherein the generated virtual environment comprises a plurality of conversational prompts and a plurality of user interface (Ul) objects to be rendered to a user;
receiving, by the virtual communicator, one or more inputs from the user in response to the rendered plurality of conversational prompts and the plurality of UI objects;
determining, by the virtual communicator, one or more services desired by the user based on a processing of the received one or more inputs; and
providing, by the virtual communicator, the desired one or more services to the user based on the determination.

16. The method of claim 15, wherein processing of the one or more inputs is based on:
analysis of the one or more inputs to determine one or more features;
classification of the determined one or more features based on one or more pre-defined domain dictionaries;
performing contextual summarization of the one or more inputs based on the classification and weights associated with the one or more dictionaries to determine a context associated with the one or more inputs; and
correlating the determined context with the plurality of services to determine one or more services desired by the user.

17. The method of claim 15, wherein the plurality of conversational prompts are one or more of: a textual prompt, an audio prompt, a video prompt; and

18. The method of claim 15, wherein the one or more inputs is one or more of: a textual input, an audio, a video, a multimedia file.

19. The method of claim 15, wherein the plurality of conversational prompts comprises questions intended to determine: one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

20. The method of claim 15, wherein the service provider corresponds to a bank and the plurality of services comprises one or more services for providing banking services, one or more services for booking appointment, one or more services for exchange of documents, and one or more services for providing customer support.

21. The method of claim 20, wherein the enabling booking of an appointment comprises rendering of one or more conversational prompts from the plurality of conversational prompts for determining: selection of a date and time of the appointment, selection of a category of requested service, and selection of an executive from the one or more executives.

22. The method of claim 21, wherein the processor is further configured to provide a real-time status indicative of an availability of the one or more executives from the plurality of executives tasked with providing one or more services from the plurality of services.

23. The method of claim 21, further comprising:
generating one or more confirmations corresponding to a booked appointment for providing the requested service from the plurality of services; and
transmitting the generated one or more confirmations to the service provider, the executive providing the service, and the user.

24. The method of claim 19, wherein the plurality of conversational prompts enable communication between the user and the one or more executives using one or more of: a telephone call, a voice over Internet (VoIP) call, a chat, a video conference, email, a screen-sharing session, a whiteboard, and short messaging service (SMS).

25. The method of claim 19, further comprising providing one or more interface to each executive from the one or more executives for one or more of:
tracking one or more requests received from a plurality of users corresponding to requested services from the plurality of services;
establishing communication with a user from the plurality of users; and
generating one or more insights corresponding to the requests serviced by an executive from the one or more executive.

26. The method of claim 25, wherein the processor is configured to facilitate parallel communication of an executive from the one or more executives with one or more users having a count less than a pre-defined count of users.

27. The method of claim 15, wherein the plurality of UI objects comprises UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board.

28. The method of claim 15, wherein the plurality of UI objects are rendered on an electronic device associated with the user in a manner to provide a user experience (UX) to the user that emulates a physical experience of the user with the service provider.

29. A non-transitory computer-readable storage medium storing instructions, which when executed by a processor enable the processor to execute a one or more operations for providing virtual banking services, the one or more operations comprising:
generating a virtual environment for a service provider offering a plurality of services, wherein the generated virtual environment comprises a plurality of conversational prompts and a plurality of user interface (UI) objects to be rendered to a user;
receiving one or more inputs from the user in response to the rendered plurality of conversational prompts and the plurality of UI objects;
determining one or more services desired by the user based on a processing of the received one or more inputs; and
providing the desired one or more services to the user based on the determination.

## Amended claims

### Amended claims in accordance with Rule 137(2) EPC.

1. A system for providing virtual services, the system comprising:
a processor; and
a memory storing instructions for execution by the processor, wherein the hardware processor is configured by the instructions to:
generate a virtual environment for a service provider offering a plurality of services, wherein the generated virtual environment comprises a plurality of conversational prompts and a plurality of user interface (Ul) objects to be rendered to a user;
receive one or more inputs from the user in response to the rendered plurality of conversational prompts and the plurality of UI objects;
wherein the processor is further configured to process the one or more inputs based on:
analysis of the one or more inputs to determine one or more features;
classification of the determined one or more features based on one or more pre-defined domain dictionaries;
performing contextual summarization of the one or more inputs based on
the classification and weights associated with the one or more dictionaries to determine a context associated with the one or more inputs; and
correlating the determined context with the plurality of services to determine one or more services desired by the user;
determine one or more services desired by the user based on a processing of the received one or more inputs; and
provide the desired one or more services to the user based on the determination.

2. The system of claim 1, wherein the plurality of conversational prompts are one or more of: a textual prompt, an audio prompt, a video prompt.

3. The system of claim 1, wherein the one or more inputs is one or more of: a textual input, an audio, a video, a multimedia file.

4. The system of claim 1, wherein the plurality of conversational prompts comprises questions intended to determine: one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

5. The system of claim 1, wherein the service provider corresponds to a bank and the plurality of services comprises one or more services for providing banking services, one or more services for booking appointment, one or more services for exchange of documents, and one or more services for providing customer support.

6. The system of claim 5, wherein for enabling booking of an appointment, the processor is configured to render one or more conversational prompts from the plurality of conversational prompts for determining: selection of a date and time of the appointment, selection of a category of requested service, and selection of an executive from the one or more executives.

7. The system of claim 6, wherein the processor is further configured to provide a real-time status indicative of an availability of the one or more executives from the plurality of executives tasked with providing one or more services from the plurality of services,

8. The system of claim 6, wherein the processor is configured to:
generate one or more confirmations corresponding to a booked appointment for providing the requested service from the plurality of services; and
transmit the generated one or more confirmations to the service provider, the executive providing the service, and the user.

9. The system of claim 4, wherein the plurality of conversational prompts enable communication between the user and the one or more executives using one or more of: a telephone call, a voice over Internet (VoIP) call, a chat, a video conference, email, a screen-sharing session, a whiteboard, and short messaging service (SMS).

10. The system of claim 4, wherein the processor is configured to provide one or more interface to each executive from the one or more executives for one or more of:
tracking one or more requests received from a plurality of users corresponding to requested services from the plurality of services;
establishing communication with a user from the plurality of users; and
generating one or more insights corresponding to the requests serviced by an executive from the one or more executive.

11. The system of claim 10, the processor is configured to facilitate parallel communication of an executive from the one or more executives with one or more users having a count less than a pre-defined count of users.

12. The system of claim 1, wherein the plurality of UI objects comprises UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board.

13. The system of claim 1, wherein the plurality of UI objects are rendered on an electronic device associated with the user in a manner to provide a user experience (UX) to the user that emulates a physical experience of the user with the service provider.

14. A method of providing virtual services, the method comprising:
generating (504), by a virtual communicator, a virtual environment for a service provider offering a plurality of services, wherein the generated virtual environment comprises a plurality of conversational prompts and a plurality of user interface (UI) objects to be rendered to a user;
receiving (506), by the virtual communicator, one or more inputs from the user in response to the rendered plurality of conversational prompts and the plurality of UI objects;
determining (508), by the virtual communicator, one or more services desired by the user based on a processing of the received one or more inputs,
wherein processing of the one or more inputs is based on:
analysis (510) of the one or more inputs to determine one or more features;
classification (512) of the determined one or more features based on one or more pre-defined domain dictionaries;
performing (514) contextual summarization of the one or more inputs based on the classification and weights associated with the one or more dictionaries to determine a context associated with the one or more inputs;
and
correlating (516) the determined context with the plurality of services to determine one or more services desired by the user;
and
providing (518), by the virtual communicator, the desired one or more services to the user based on the determination.

15. The method of claim 14, wherein the plurality of conversational prompts are one or more of: a textual prompt, an audio prompt, a video prompt; and

16. The method of claim 14, wherein the one or more inputs is one or more of: a textual input, an audio, a video, a multimedia file.

17. The method of claim 14, wherein the plurality of conversational prompts comprises questions intended to determine: one or more services desired by the user, one or more answers to the questions posed by the user, one or more directions to assist user in locating one or more UI objects that correspond to the one or more services desired by the user, one or more details of one or more executives tasked with providing the desired one or more services, a feedback corresponding to a service provided to the user.

18. The method of claim 14, wherein the service provider corresponds to a bank and the plurality of services comprises one or more services for providing banking services, one or more services for booking appointment, one or more services for exchange of documents, and one or more services for providing customer support.

19. The method of claim 18, wherein the enabling booking of an appointment comprises rendering of one or more conversational prompts from the plurality of conversational prompts for determining: selection of a date and time of the appointment, selection of a category of requested service, and selection of an executive from the one or more executives.

20. The method of claim 19, wherein the processor is further configured to provide a real-time status indicative of an availability of the one or more executives from the plurality of executives tasked with providing one or more services from the plurality of services.

21. The method of claim 19, further comprising:
generating one or more confirmations corresponding to a booked appointment for providing the requested service from the plurality of services; and
transmitting the generated one or more confirmations to the service provider, the executive providing the service, and the user.

22. The method of claim 17, wherein the plurality of conversational prompts enable communication between the user and the one or more executives using one or more of: a telephone call, a voice over Internet (VoIP) call, a chat, a video conference, email, a screen-sharing session, a whiteboard, and short messaging service (SMS).

23. The method of claim 17, further comprising providing one or more interface to each executive from the one or more executives for one or more of:
tracking one or more requests received from a plurality of users corresponding to requested services from the plurality of services;
establishing communication with a user from the plurality of users; and
generating one or more insights corresponding to the requests serviced by an executive from the one or more executive.

24. The method of claim 23, wherein the processor is configured to facilitate parallel communication of an executive from the one or more executives with one or more users having a count less than a pre-defined count of users.

25. The method of claim 14, wherein the plurality of UI objects comprises UI objects corresponding to a stock price listings, real-time news flashes, advertisements, weather information, listing of banking services provided by the bank, one or more tutorials for availing the listed services, Universal Resource Locator (URLs) corresponding to social networking pages of the bank, and a notice board.

26. The method of claim 14, wherein the plurality of UI objects are rendered on an electronic device associated with the user in a manner to provide a user experience (UX) to the user that emulates a physical experience of the user with the service provider.

27. A non-transitory computer-readable storage medium storing instructions, which when executed by a processor enable the processor to execute a one or more operations for providing virtual banking services, the one or more operations comprising:
generating a virtual environment for a service provider offering a plurality of services, wherein the generated virtual environment comprises a plurality of conversational prompts and a plurality of user interface (Ul) objects to be rendered to a user;
receiving one or more inputs from the user in response to the rendered plurality of conversational prompts and the plurality of UI objects;
determining one or more services desired by the user based on a processing of the received one or more inputs,
wherein processing of the one or more inputs is based on:
analysis of the one or more inputs to determine one or more features;
classification of the determined one or more features based on one or more pre-defined domain dictionaries;
performing contextual summarization of the one or more inputs based on the classification and weights associated with the one or more dictionaries to determine a context associated with the one or more inputs; and
correlating the determined context with the plurality of services to determine one or more services desired by the user;
and
providing the desired one or more services to the user based on the determination.
